# EUROPÄISCHE PATENTSCHRIFT

(11) **EP 3 380 268 B1**
(45) Veröffentlichungstag und Bekanntmachung des Hinweises auf die Patenterteilung: **30.12.2020**
(21) Anmeldenummer: 16804705.8
(22) Anmeldetag: 17.11.2016
(51) Int. Cl.: B23P 21/00, B23P 23/06, B62D 65/02, B62D 65/18

(54) **FERTIGUNGSEINRICHTUNG UND FERTIGUNGSVERFAHREN**
MANUFACTURING DEVICE AND MANUFACTURING METHOD
DISPOSITIF DE FABRICATION ET PROCÉDÉ DE FABRICATION

(30) Priorität: 27.11.2015 DE 202015106459 U
(43) Veröffentlichungstag der Anmeldung: 03.10.2018
(73) Patentinhaber: KUKA Systems GmbH, 86165 Augsburg (DE)
(72) Erfinder: THORWARTH, Paul, 86154 Augsburg (DE)
(74) Vertreter: Ernicke, Moritz
(86) Internationale Anmeldenummer: PCT/EP2016/078012
(87) Internationale Veröffentlichungsnummer: WO 2017/089224

(56) Entgegenhaltungen:
- EP-A1- 0 933 161
- EP-A1- 2 554 459
- WO-A1-2012/166775
- DE-A1-102005 059 426
- US-A- 5 027 502

## Beschreibung

Die Erfindung betrifft eine automatische Fertigungseinrichtung und ein Fertigungsverfahren mit den Merkmalen im Oberbegriff des Verfahrens- und Vorrichtungsanspruchs.

Eine solche Fertigungseinrichtung und ein solches Fertigungsverfahren sind aus der WO 2012/166775 A und auch aus der DE 2014 101 002 U1 bekannt.

Die US 5,027,502 A zeigt eine Fertigungseinrichtung für die sog. Hochzeit von Fahrzeugen, bei der in einer ersten Station eine vorgefertigte Karosserie von einem Hängeförderer zugeführt auf bereit gestellte vordere und hintere Antriebssysteme abgesetzt wird, die von einem bodenseitigen Rollenförderer auf einer Palette der Station zugeführt wurden. Die vom Hängeförderer gelöste Karosserie und die Antriebssysteme auf der Palette werden anschließend vom Rollenförderer einer zweiten Station zugeführt und dort von Robotern bearbeitet.

Bei der Fertigungseinrichtung der WO 2012/166775 A wird ein Werkstückträger zum Transport von Werkstücken von einem Hängeförderer schwebend durch eine Reihe von Schweißstationen transportiert. Dabei bleiben die Werkstücke stets mit dem Werkstückträger verbunden, wobei dieser auf unterschiedliche Höhenniveaus gebracht wird. Dies sind ein erstes niedriges Niveau zum manuellen Beladen des Werkstückträgers, ein mittleres Niveau zum Einfahren in eine Schweißstation und zum Weitertransport sowie ein abgesenktes Niveau, in dem die auf dem Werkstückträger gehaltenen Werkstücke in Eingriff mit Spannern auf einer quer zur Förderrichtung eingeschobenen Werkzeugpalette gebracht werden.

Bei der EP 2 554 459 A1 werden Rohkarosserien auf Skids in eine Schweißstation gebracht, in der ein Dachteil auf die Rohkarosserien aufgelegt und angeschweißt wird. Hierbei sind die Dachteile auf Racks vor der Station angeordnet, wobei dachteilspezifische Spanner über der Schweißstation positioniert sind.

In der Fertigungseinrichtung der EP 0 933 161 A1 werden Bodengruppen mit einem Hängeförderer in eine Schweißstation auf großer Höhe eingefahren, mit einem Lift vom Hängeförderer gelöst und auf eine stationäre Spannvorrichtung abgesenkt, wobei anschließend Seitenwände mit Hilfe von fahrbaren Seitenspannrahmen herangeführt und angeschweißt werden. Die Schweißteile werden dann mit dem gleichen Lift wieder nach oben zum Hängeförderer transportiert und von diesem weiter befördert.

Eine andere Fertigungseinrichtung ist aus der DE 20 2014 101 002 U1 bekannt. Die Fertigungseinrichtung weist zwei Fertigungszellen mit jeweils einer Arbeitsstelle und einer dortigen stationären Aufnahmevorrichtung für Werkstücke auf. An der einem vorbeiführenden Förderweg zugewandten Außenfront der Fertigungseinrichtung ist eine Transportlogistik mit Handlingrobotern auf Fahrachsen und endseitigen Schnittstellen für den Werkstückwechsel angeordnet, welche die Arbeitsstellen bedient und Werkstücke dort zu- und abführt.

Es ist Aufgabe der vorliegenden Erfindung, eine weiter verbesserte automatische Fertigungstechnik aufzuzeigen.

Die Erfindung löst diese Aufgaben mit den Merkmalen im Verfahrens- und Vorrichtungshauptanspruch.
Die beanspruchte Fertigungstechnik, d.h. die Fertigungseinrichtung, ein Fertigungsverfahren und eine Fertigungsanlage, haben verschiedene Vorteile.

Auf dem durch die automatische Fertigungseinrichtung und durch die Arbeitsstelle führenden Förderweg können Fördermittel Werkstücke und ggf. Werkzeuge der Arbeitsstelle zuführen und von dort wieder abführen oder auch durch die Fertigungseinrichtung hindurch transportieren. Die Fertigungseinrichtung kann dadurch in eine Fördereinrichtung und ein Förderliniensystem einer Fertigungsanlage eingebunden sein. Der durchgängige Förderweg kann für eine Verkettung von mehreren Fertigungseinrichtungen genutzt werden.

Der vom Förderweg und vom Fördermittel vertikal nach oben beabstandete Ablageträger kann eine Zwischenablage für ein Werkstück an der Arbeitsstelle bilden. An einem hier abgelegten Werkstück werden ein oder mehrere Prozesse von programmgesteuerten Fertigungsmitteln durchgeführt. Ferner kann am Ablageträger ein Assemblieren von mehreren Werkstücken stattfinden, die von einem oder von mehreren Fördermitteln zugeführt werden.

Die Fördermittel haben hierfür jeweils ein fest zugeordnetes oder wechselbares Lastaufnahmemittel für ein Werkstück und/oder für ein Werkzeug. Wenn mehrere Werkstücke auf einem Lastaufnahmemittel angeordnet sind, brauchen sie dort noch keine fertigungsgerechte Lage einzunehmen. Sie können dichter gepackt werden. An der Arbeitsstelle kann das Lastaufnahmemittel dank des Ablageträgers durch ein programmgesteuertes Fertigungsmittel entladen werden, wobei die fertigungsgerechte Lage und Zuordnung der verschiedenen Werkstücke erst auf dem Ablageträger gebildet wird.

Das entladene Fördermittel kann dann die Arbeitsstelle wieder verlassen und den Förderweg freimachen. Anschließend können weitere Werkstücke mit dem gleichen oder einem anderen Fördermittel zugeführt werden. Ein fertig bearbeitetes Werkstück kann mit dem gleichen oder einem anderen Fördermittel abgeführt werden. Außerdem kann der freigemachte Förderweg als Durchfahrtsweg für andere beladene oder leere Fördermittel genutzt werden. Der beabstandete Ablageträger entkoppelt die Prozesse und die prozessgerechte Werkstücklage vom Förderweg.

Der Förderweg ist flurgebunden angeordnet. Auf dem Förderweg verkehren ebenfalls flurgebundene Fördermittel, vorzugsweise autonome Fahrzeuge. Der Ablageträger ist mit Distanz über dem Förderweg und dem Fördermittel angeordnet und lässt an der Arbeitsstelle eine Durchfahrtsöffnung für ein leeres oder beladenes Fördermittel frei. Eine für den Ablageträger vorgesehene lokale Stützeinrichtung an der Arbeitsstelle kann entsprechend ausgebildet sein und ebenfalls die Durchfahrtsöffnung freilassen.

Der Ablageträger kann mobil ausgebildet sein und mittels einer Handlingeinrichtung zwischen einer Arbeitsposition am Förderweg und einer hiervon entfernten Ruheposition bewegt werden. In der Ruheposition kann die Durchfahrtsöffnung in der Vertikalen vergrößert werden und den Durchlass von beladenen Fördermitteln mit Überhöhe ermöglichen. Ein eventuell auf dem Ablageträger befindliches Werkstück kann von einer programmgesteuerten Fertigungseinrichtung währenddessen aufgenommen und gehalten werden.

Die Fertigungseinrichtung kann an der Arbeitsstelle eine Positioniereinrichtung für ein Lastaufnahmemittel und/oder für ein Fördermittel aufweisen. Diese ist vorzugsweise an der Stützeinrichtung angeordnet. Die Positioniereinrichtung sorgt für eine exakte Positionierung der Werkstücke für einen Entlade- und Beladevorgang. Außerdem kann alternativ oder zusätzlich ein Prozess an einem Werkstück durchgeführt werden, das sich an der Arbeitsstelle auf einem Lastaufnahmemittel befindet.

Die Fertigungseinrichtung ist vorzugsweise applikationsflexibel ausgebildet und kann mittels programmgesteuerter Fertigungsmittel, insbesondere Industrierobotern, unterschiedlichste Prozesse an unterschiedlichsten Werkstücken durchführen und diese ggf. auch handhaben. Die Fertigungseinrichtung kann an die jeweilige Applikation und den oder die jeweils erforderlichen Prozesse mittels applikationsspezifischer und wechselbarer Werkzeuge adaptiert werden.

Die Werkzeuge können in der Fertigungsstation mittels Speichern bevorratet werden und können von Fördermitteln mit Lastaufnahmemitteln zu- und abgeführt werden. Ferner können in einer Steuerung der Fertigungseinrichtung verschiedene applikationsspezifische Steuerungsprogramme und andere Programme gespeichert werden. Sie können mittels einer werkstückspezifischen und/oder applikationsspezifischen Kennung an einem Lastaufnahmemittel ausgewählt werden. Hierüber kann auch die jeweils erforderliche Werkzeugbestückung der Fertigungsmittel erkannt und eingestellt werden. In der Fertigungseinrichtung können dadurch eine Mehrzahl unterschiedlicher Prozesse an einer Mehrzahl unterschiedlicher Werkstücke durchgeführt werden. Durch die variable Werkzeug- und Programmbestückung ist die Fertigungseinrichtung applikationsflexibel.

Die Fertigungseinrichtung kann mit einer weiteren Fertigungseinrichtung für einen Sekundärprozess an einem Werkstück verbunden sein. Hier können z.B. Prozesse durchgeführt werden, die in der applikationsflexiblen Fertigungseinrichtung nicht oder nur schwer machbar sind. Zudem kann durch eine Diversifizierung und eine gleichzeitige Durchführung mehrerer Prozesse Taktzeit gespart und die Fertigungsleistung erhöht werden. Der Werkstückwechsel kann über Schnittstellen am Randbereich der Fertigungseinrichtungen erfolgen. Die Schnittstellen können sich an einer die jeweilige Fertigungseinrichtung umgebenden Schutzabtrennung befinden. Die auf dem Förderweg befindlichen Schnittstellen können als Schleusen für leere und beladene Fördermittel in der Schutzabtrennung ausgebildet sein.

Die Fertigungseinrichtungen können mehrfach angeordnet sein und Bestandteile einer Fertigungsanlage bilden. Diese weist eine Fördereinrichtung mit mehreren Fördermitteln und mit zumindest zwei typverschiedenen Lastaufnahmemitteln auf. Die Lastaufnahmemittel sind an unterschiedliche Typen von Werkstücken adaptiert und mit der besagten Kennung versehen.

Mehrere aufgereihte Fertigungseinrichtungen können untereinander durch einen gemeinsamen, durchgängigen Förderweg direkt miteinander verbunden sein. Hierdurch kann eine Förderlinie gebildet werden. Ein Fördermittel kann auf der Förderlinie mehrere Fertigungseinrichtungen bedarfsweise unterbrechungsfrei durchfahren.

Neben den aufgereihten Fertigungseinrichtungen kann ein weiterer Förderweg angeordnet sein. Dieser kann eine weitere Förderlinie bilden. Die durch und neben den Fertigungseinrichtungen verlaufenden Förderlinien können durch Querverbindungen ein vernetztes Förderliniensystem bilden. Sie können einen Einbahnverkehr mit definiertem Hinweg und Rückweg ermöglichen, was die Förderlogistik und insbesondere deren Programmierung wesentlich erleichtert und vereinfacht sowie Störungen und Unfälle minimiert. Zwischen beabstandeten Fertigungseinrichtungen kann ein Zufahrtskorridor gebildet werden, der einerseits die neben und durch die Fertigungseinrichtungen verlaufenden Förderlinien miteinander verbindet und andererseits auch einen Parkbereich oder Pufferbereich für beladene oder leere Fördermittel ermöglicht. An den Zufahrtskorridoren können die Fördermittel ihre Fahrtrichtung ändern. Dies ist z.B. durch eine lenkbare Ausführung der Fördermittel oder durch Umsetzer, z.B. Drehscheiben oder dgl. möglich.

Die Fördereinrichtung verbindet einen Fertigungsbereich und einen Logistikbereich einer Fertigungsanlage, wobei durch die vernetzten Förderlinien ein oder mehrere Fertigungs- und Förderloops gebildet werden können. Dies erleichtert und vereinfacht die Fertigungsplanung in der Fertigungsanlage und ist auch für eine Entflechtung der innerhalb eines Fertigungszyklus von den Fördermitteln zu durchfahrenden Förderbahnen von Vorteil. Der Förderverkehr kann leicht und besser gesteuert und überwacht werden. Er ist auch übersichtlicher und erleichtert die Planung und den Betrieb der Fertigungsanlage.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: einen Fertigungsbereich einer Fertigungsanlage mit mehreren verketteten Fertigungseinrichtungen,
- Figur 2:: eine Schemadarstellung einer Fertigungsanlage mit einem Fertigungsbereich, einem Logistikbereich und einer Fördereinrichtung,
- Figur 3 bis 5:: eine Arbeitsstelle mit einem Ablageträger in einer Fertigungseinrichtung in verschiedenen Ansichten und Betriebsstellungen,
- Figur 6 und 7:: zwei Funktionsabläufe an einer Arbeitsstelle und
- Figur 8:: eine ausschnittsweise Detaildarstellung eines Fertigungsbereichs mit mehreren verketteten Fertigungseinrichtungen und eines Logistikbereichs.

Die Erfindung betrifft eine Fertigungseinrichtung (18-22) für Werkstücke (2,2',2") und dort ablaufende Fertigungsprozesse. Die Erfindung betrifft ferner eine Fertigungsanlage (1) mit mehreren Fertigungseinrichtungen (18-22) und ein Fertigungsverfahren für Werkstücke (2,2',2").

Die Fertigungseinrichtungen (18-22) sowie die Fertigungsanlage (1) und deren weitere Komponenten sind automatisiert und programmgesteuert.

Die Werkstücke (2,2',2") können von beliebiger Art und Größe sein. Sie können einteilig oder mehrteilig sein. Wenn von einem Werkstück die Rede ist, schließt dies auch eine Mehrzahl von Werkstücken ein. Vorzugsweise handelt es sich bei den Werkstücken (2,2',2") um Karosseriebauteile von Fahrzeugkarosserien. Die Fertigungsanlage (1) kann z.B. für den Rohbau von Fahrzeugkarosserien eingesetzt werden. Die Werkstücke (2, 2',2") können unterschiedlich ausgebildet sein.

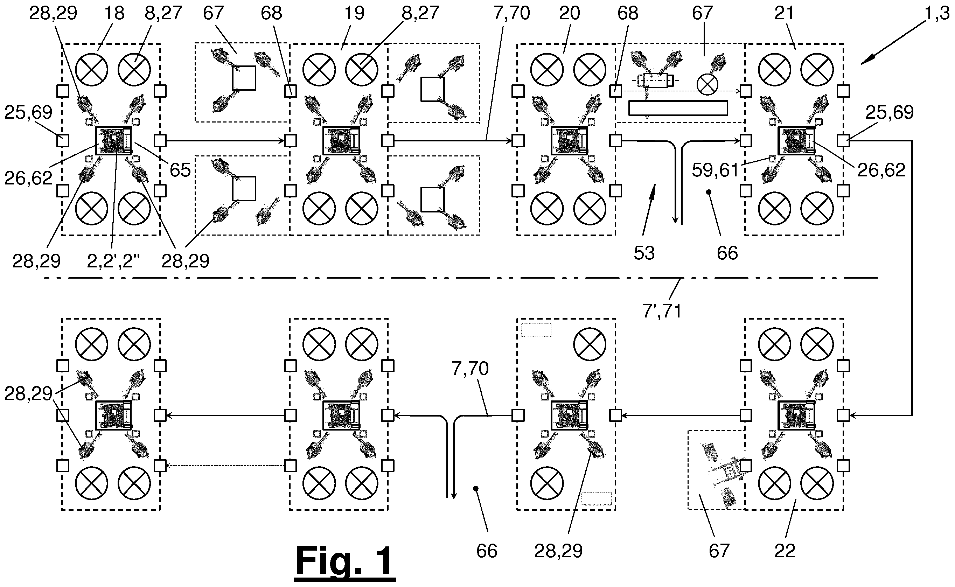

Im Zuge des automatischen Fertigungsverfahrens können gemäß Figur 1 bis 4 ein oder mehrere Werkstücke (2,2',2") in einer Folge von Fertigungsschritten mit unterschiedlichen Fertigungsprozessen bearbeitet werden. Die Schrittzahl richtet sich nach dem Prozessvolumen, der Auslastung, Taktvorgaben und anderen Kriterien. Hierbei wird z.B. im Rohbau durch Assemblieren und Fügen von Werkstückteilen ein Fertigungs-Produkt, insbesondere eine Karosserie-Baugruppe, erzeugt. Dies kann ein Zwischenprodukt sein, aus dem mit weiteren Prozessen, z.B. Verbindung mit weiteren Werkstückteilen oder anderweitig gefertigten Zwischenprodukten, ein Endprodukt erzeugt wird. Die Fertigungsschritte werden bevorzugt in einer Abfolge nacheinander in mehreren Fertigungseinrichtungen (18-22) durchgeführt. Hierbei werden in einem Fertigungsschritt jeweils ein oder mehrere Prozess-Segmente ausgeführt.

Diese Fertigungsprozesse können unterschiedliche Techniken betreffen, z.B. Fügen, insbesondere Schweissen, Löten oder Kleben, Auftragen und Abtragen von Materialien, Wärmebehandlungen, Umformen, spanabhebende Bearbeitung, Assemblier- und Montagevorgänge oder dgl..

Die Fertigungsanlage (1), das Fertigungsverfahren und die Fertigungseinrichtungen (18-22) sind flexibel und applikationsspezifisch adaptierbar. Mit einer Applikationsspezifizierung wird eine Anpassung an unterschiedliche Fertigungsprozesse und/oder an unterschiedliche Werkstücke (2,2',2") bezeichnet.

Für diese verschiedenen Prozesse werden verschiedene applikationsspezifische Werkzeuge (8) benötigt. Die applikationsspezifischen Werkzeuge (8) können Einzelwerkzeuge oder Satzwerkzeuge sein. Sie können aus mehreren Toolsegmenten bestehen. Nachfolgend werden die applikationsspezifischen Werkzeuge (8) der Einfachheit halber als Werkzeuge (8) bezeichnet.

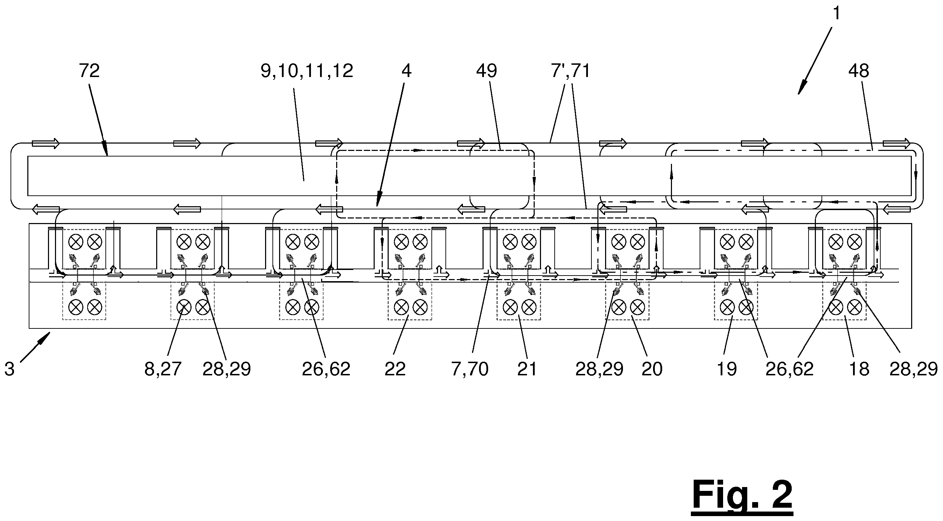

Figur 1 und 2 zeigen eine Schemadarstellung einer Fertigungsanlage (1) und ihrer Komponenten. Die Fertigungsanlage (1) weist einen Fertigungsbereich (3) mit mehreren darin angeordneten Fertigungseinrichtungen (18-22) auf. Ferner besitzt die Fertigungsanlage (1) einen Logistikbereich (72). Dieser kann eine Bereitstellung (10) für Werkstücke (2,2',2") und eine Bereitstellung (11) für verschiedene besagte Werkzeuge (8) aufweisen. Die Bereitstellungen (10,11) werden auch als Warehouse (10) und als Toolstore (11) bezeichnet.

Ferner ist eine Fördereinrichtung (4) vorhanden, welche die Fertigungseinrichtungen (18-22) untereinander und mit dem bevorzugt externen Logistikbereich (72) flexibel verbindet bzw. verkettet.

Die Fördereinrichtung (4) weist eine Vielzahl von Fördermitteln (5) sowie eine Vielzahl von Förderwegen (7,7') auf, auf denen die Fördermittel (5) verkehren.

Ein Förderweg (7) erstreckt sich jeweils durch eine Fertigungseinrichtung (18-22) hindurch. Ein anderer Förderweg (7') verläuft jeweils neben einer Fertigungseinrichtung (18-22). Die Förderwege (7,7') können parallel angeordnet sein.

Mehrere durchgängige Förderwege (7) können aneinander anschließen und zusammen eine Förderlinie (70) bilden. Mehrere nebengeordnete Förderwege (7') können aneinander anschließen und zusammen eine Förderlinie (71) bilden. Die Förderlinien (70,71) können mit Abstand nebeneinander, insbesondere parallel verlaufen. Sie können miteinander querverbunden sein, z.B. an den Enden des Fertigungsbereichs (3) und/oder an einem Zufahrtskorridor (66) zwischen zwei entlang des Förderwegs (7) beabstandeten Fertigungseinrichtungen (18-22). Die Förderwege (7,7') und Förderlinien (70,71) sind vorzugsweisen in einem Netz angeordnet und können sich auch kreuzen.

Die Fördermittel (5) können individuell steuerbar sein und sind bevorzugt autonom. Die Fördermittel (5) sind bevorzugt als flurgebundene fahrerlose Transportfahrzeuge, sog. AGV oder FTF, ausgebildet. Sie können Kurven fahren oder ggf. auch auf der Stelle wenden. Sie können sich ggf. auch omnidirektional bewegen, z.B. mittels Mecanum-Rädern. Die Fördermittel (5) können ferner als Rollen- oder Bandförderer ausgebildet sein. Die Fördereinrichtung (4) kann mehrere unterschiedliche Fördermittel (5) aufweisen.

Die Fördermittel (5) verkehren im Netz der Förderwege (7,7') und Förderlinien (70,71) auf frei programmierbaren Förderbahnen. Vorzugsweise sind die Förderlinien (70,71) als Einbahnstraßen mit entgegengesetzter und durch Pfeile angedeuteter Fahrtrichtung ausgebildet. Durch die Querverbindungen, insbesondere den oder die Zufahrtskorridore (66) können Förderloops (48,49) gebildet werden, die auch Fertigungsloops unter Verkettung von mehreren Fertigungseinrichtungen (18-22) schaffen. Die Fertigungs- bzw. Förderloops (48,49) können einander überschneiden.

An den ein oder mehreren Zufahrtskorridoren (66) können die Fördermittel (5) wahlweise entlang des Förderwegs (7) bzw. der Förderlinie (70) von einer in die andere Fertigungseinrichtung (18-22) weiterfahren oder auf der Querverbindung abbiegen und zur anderen Förderlinie (71) fahren. Das Abbiegen kann durch eine eigene Lenkbewegung des Fördermittels (5), durch Umsetzen mittels einer Drehscheibe oder auf andere Weise erfolgen.

Im Zufahrtskorridor (66) bzw. der Querverbindung kann ein Parkbereich (53) für das temporäre Abstellen eines leeren oder beladenen Fördermittels (5) gebildet werden. Hierdurch können Pufferspeicher für die Kompensation von Taktzeitunterschieden oder Störungsphasen oder auch für eine Sequenzheilung oder andere Zwecke gebildet werden. Der oder die Zufahrtskorridore (66) können von einem seitlichen Förderweg (7') bzw. einer seitlichen Förderlinie (71) abgeschottet sein und ein steuerbaren und kontrollierbaren Durchgang (73) für ein leeres oder beladenes Fördermittel (5) aufweisen. Dieser kann z.B. als Schutztor mit optischer Umgebungserfassung und - überwachung ausgebildet sein.

Die Fördermittel (5) haben in den verschiedenen Ausführungsformen vorzugsweise jeweils einen eigenen individuell steuerbaren Antrieb und eine eigene programmierbare Steuerung. Die Energieversorgung kann auf beliebig geeignete Weise erfolgen, z.B. durch eine stationäre oder instationäre Energieversorgungseinrichtung.

Für den Transport von Werkstücken (2,2',2") und/oder Werkzeugen (8) vom Logistikbereich (72) zum Fertigungsbereich (3) und zurück sowie im Fertigungsbereich (3) zwischen den Fertigungseinrichtungen (18-22) tragen die Fördermittel (5) jeweils ein oder mehrere adaptierte Lastaufnahmemittel (6). Diese werden nachfolgend abgekürzt als LAM bezeichnet.

Die LAM (6) können fest oder wechselbar auf einem Fördermittel (5) angeordnet sein. Die LAM (6) können eine feste Adaption für bestimmte Werkstücke (2,2',2") und/oder Werkzeuge (8) aufweisen. Sie können alternativ flexibel bzw. verstellbar und unterschiedlich adaptierbar ausgebildet sein. Die LAM (6) können unterschiedliche angepasste Aufnahmen und Haltemittel für die Werkstücke (2,2',2") und/oder Werkzeuge (8) aufweisen und diese in einer definierten Position halten. Die LAM (6) können z.B. als Basis einen platten- oder rahmenförmigen Träger aufweisen.

Mehrere LAM (6) sind verschiedenartig ausgebildet und bilden verschiedene Typen (A,B,C,D). Sie können dabei an unterschiedliche Werkstücke (2,2',2") adaptiert sein. Ein verstellbares LAM (6) kann zwei oder mehr verschiedene Typen bilden. Die Zahl der verschiedenen LAM-Typen (A,B,C,D) kann beliebig hoch sein. Sie beträgt zwei, drei, vier oder mehr. Die Zahl kann von dem in der Fertigungsanlage (1) zu fertigenden Prozessvolumen abhängen, insbesondere von der Zahl der unterschiedlichen Werkstücke (2,2',2"). Für die Werkzeuge (8) können weitere LAM-Typen vorhanden sein.

Die typverschiedenen LAM (6) haben eine Typkennung für ihren jeweiligen Typ (A,B,C,D), die von einer Erfassungseinrichtung an den Fertigungseinrichtungen (18-22) detektiert und erkannt werden kann. Die Typkennung kann informations- und steuertechnisch mit einem bestimmten Werkstück (2,2',2") verknüpft sein und kann die Art des Werkstücks (2,2',2") und/oder Werkzeugs (8) repräsentieren.

Die Fertigungsanlage (1) weist eine mit der Fördereinrichtung (4) verbundene Bereitstellung (9) für die verschiedenen LAM (6) auf, die bevorzugt in den Logistikbereich (72) integriert ist. Eine solche Bereitstellung (9,10,11) kann z.B. einen Lagerbereich für Werkstücke (2,2',2") und/oder Werkzeuge (8) und/oder LAM (6) und einen mit der Fördereinrichtung (4) verbundenen Beladebereich mit einer Beladeeinrichtung aufweisen. Die Fertigungsanlage (1) weist ferner eine Bereitstellung (12) für Fördermittel (5) auf.

Im Fertigungsbereich (3) sind die mehreren Fertigungseinrichtungen (18-22) in einer linienförmigen oder flächigen Verteilung angeordnet. Vorzugsweise sind die Fertigungseinrichtungen (18-22) in einer gleichmäßigen, insbesondere kartesischen Matrix verteilt angeordnet. Die Fördereinrichtung (4) ist dafür ausgelegt, zumindest einen Typ, insbesondere alle Typen (A,B,C,D), von LAM (6) auf den Förderwegen (7,7') und den Förderlinien (70,71) zu und von der oder den Fertigungseinrichtungen (18-22) zu verlagern.

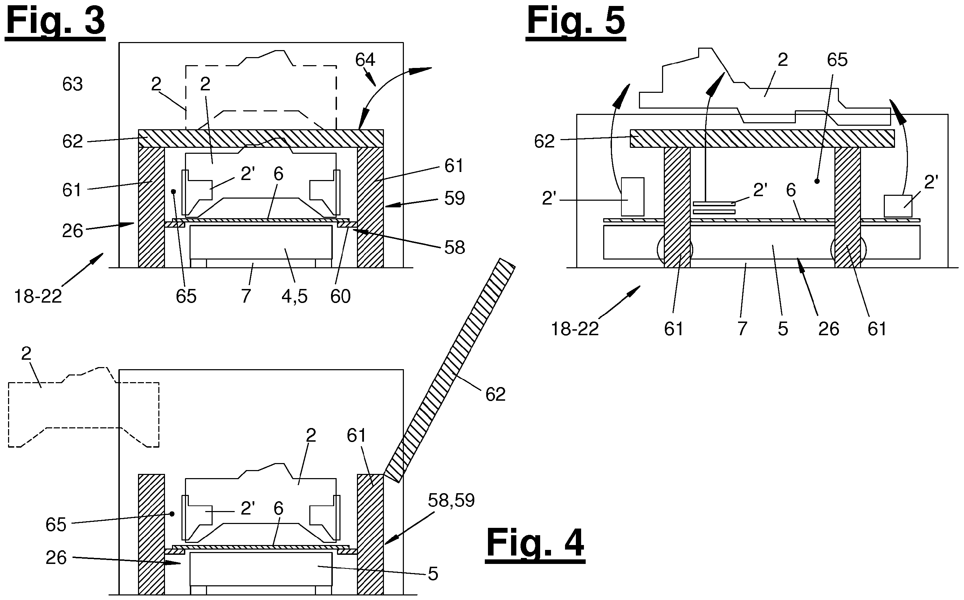

Zumindest mehrere Fertigungseinrichtungen (18-22) sind untereinander gleich ausgebildet. Vorzugsweise sind sie als einzelne Fertigungszellen (23) gestaltet. Alternativ ist eine andere, z.B. mehrzellige Ausbildung möglich. In Figur 3 ist eine zellenartige Fertigungseinrichtung (18-22) beispielhaft dargestellt.

Die gezeigte Fertigungseinrichtung (18-22), insbesondere Fertigungszelle (23), arbeitet automatisch. Sie weist eine einzelne, bevorzugt zentrale Arbeitsstelle (26) bzw. einen Bearbeitungsbereich und ein oder mehrere applikationsflexible Fertigungsmittel bzw. Fertigungsgeräte (28,29) auf. Alternativ können mehrere Arbeitsstellen (26) bzw. Bearbeitungsbereiche vorhanden sein. Die Arbeitsstelle(n) (26) kann zur sequenziellen Aufnahme von zumindest zwei verschiedenartigen bzw. typverschiedenen LAM (6) und des jeweils mitgeführten Werkstücks (2,2',2") und/oder Werkzeugs (8) dienen.

Die Fertigungsmittel (28,29) können gleich oder unterschiedlich ausgebildet und jeweils einzeln oder mehrfach vorhanden sein. Zumindest ein Fertigungsmittel (29) dient zur Bearbeitung eines Werkstücks (2,2',2") im Bearbeitungsbereich (26), insbesondere auf dem LAM (6). Das Fertigungsmittel (29) kann zusätzlich auch ein Werkstück (2,2',2") handhaben. Vorzugsweise wird ein anderes zusätzliches Fertigungsmittel (28) zum Handhaben eines Werkstücks (2,2',2") eingesetzt.

Die Fertigungsmittel (28,29) sind z.B. um die Arbeitsstelle (26) verteilt angeordnet. Insbesondere befinden sie sich zu beiden Seiten der Arbeitsstelle (26) und des Förderwegs (7). Die Fertigungsmittel (28,29) können stationär oder mittels einer Zusatzachse verfahrbar angeordnet sein. Die applikationsflexiblen Fertigungsmittel (28,29) sind vorzugsweise als mehrachsige und programmierbare Industrieroboter ausgebildet und können mittels einer automatischen Wechselkupplung das benötigte Werkzeug (8) bzw. Toolsegment aufnehmen, benutzen und bedarfsweise automatisch abgeben und wechseln. Alternativ kann ein Fertigungsmittel (29) in anderer Weise, z.B. als Werkzeugmaschine ausgebildet sein.

Die applikationsflexiblen Fertigungsmittel (28,29) sind vorzugsweise für verschiedene Aufgaben vorgesehen. Die Fertigungsmittel (29) weisen z.B. austauschbare applikationsspezifische Werkzeuge (8) für die Durchführung des jeweiligen Fertigungsprozesses auf, die z.B. als Fügewerkzeug, Umformwerkzeug oder dgl. ausgebildet sind. Diese Fertigungsmittel (29) sind z.B. als Schweissroboter ausgebildet. Die anderen Fertigungsmittel (28) tragen ebenfalls austauschbare applikationsspezifische Werkzeuge (8), die z.B. zum Handhaben der ein oder mehreren Werkstücke (2) beim Fertigungsprozess ausgebildet sind. Diese Werkzeuge (8) können Greifwerkzeuge sein. Die Fertigungsmittel (28) sind z.B. als Handlingroboter ausgebildet.

Die Fertigungseinrichtung (18-22), insbesondere die Fertigungszelle (23), weist einen oder mehrere Speicher (27) für die besagten Werkzeuge (8) auf. Ferner weist die Fertigungseinrichtung (18-22) eine Steuereinrichtung mit einem Speichermittel für eine Vielzahl von applikationsspezifischen und auf verschiedene LAM-Typen (A,B,C,D) adaptierten Steuerprogrammen auf. Die Fertigungseinrichtung (18-22) hat außerdem eine Erfassungsvorrichtung für die Typenkennung. Die Fertigungsanlage (1) weist eine Steuerung auf, die mit Steuereinheiten für die Fertigungseinrichtungen (18-22), die Fördereinrichtung (4) und die Bereitstellungen (9,10,11) verbunden ist.

Die Fertigungseinrichtung (18-22) und ihre Fertigungsmittel (28,29) sowie evtl. weitere Einrichtungskomponenten haben eine applikationsneutrale Grundausbildung und werden durch Bestückung mit applikationsspezifischen Werkzeugen (8) und durch Umprogrammierung bzw. durch ein Steuerprogramm an die jeweilige Applikation adaptiert. Durch diese Grundausbildung und die Bestückungs- und Adaptionsmöglichkeit sind sie applikationsflexibel.

Die Fertigungseinrichtung (18-22), insbesondere die Fertigungszelle (23) kann ferner eine oder mehrere Versorgungseinrichtungen für Betriebsmittel, insbesondere elektrischen Strom, fluidische Medien oder dgl., sowie Hilfsvorrichtungen aufweisen. Ferner kann eine umgebende Schutzabtrennung (24), z.B. in Form eines Zaunes, vorhanden sein. In der Schutzabtrennung (24) können eine oder mehrere Schleusen (25) für den gesicherten Einlass und Auslass eines Fördermittels (5) mit LAM (6) auf dem Förderweg (7) vorhanden sein.

In den Fertigungseinrichtungen (18-22) ist jeweils in der vorerwähnten Weise ein Förderweg (7) für ein Fördermittel (5) mit einem LAM (6) für ein Werkstück (2,2',2") und/oder für ein Werkzeug (8) angeordnet, welches sich durch die Fertigungseinrichtung (18-22) hindurch und auch durch die Arbeitsstelle (26) hindurch erstreckt. Wie Figur 3 bis 5 verdeutlichen, ist an der Arbeitsstelle (26) mit vertikalem Abstand zum Förderweg (7) ein Ablageträger (62) für ein Werkstück (2,2',2") angeordnet. Figur 3 und 4 verdeutlichen in einer Frontansicht zwei Betriebsstellungen des Ablageträgers (62). Figur 5 zeigt eine Seitenansicht zu Figur 3.

Der Ablageträger (62) wird mittels einer lokalen Stützeinrichtung (59) an der Arbeitsstelle (26) starr oder beweglich gehalten. Der Ablageträger (62) bildet eine Zwischenablage für ein Werkstück (2,2',2"). Er ist mit vertikalem Abstand direkt über dem bodennahen Förderweg (7) und auch über dem Fördermittel (5) angeordnet.

Zwischen dem Förderweg (7) und dem Ablageträger (62) wird eine Durchfahrtsöffnung (65) für ein Fördermittel (5) ausgebildet, welches wahlweise leer oder mit einem Werkstück (2,2',2") beladen sein kann.

Der bevorzugt mobil ausgebildete Ablageträger (62) kann zwischen einer in Figur 3 gezeigten Arbeitsposition am Förderweg (7) und einer hiervon entfernten Ruheposition gemäß Figur 4 bewegt werden. Hierfür weist die Fertigungseinrichtung (18-22) eine Handlingeinrichtung (64) auf. Diese kann als separate steuerbare und angetriebene Vorrichtung ausgebildet sein. Sie kann alternativ von einem programmierbaren Fertigungsmittel (28), insbesondere einem Handlingroboter, gebildet werden.

Wie Figur 3 und 4 verdeutlichen, kann der Ablageträger (62) in der Arbeitsposition die Durchfahrtsöffnung (65) am Förderweg (7) nach oben abdecken und sie in der Ruheposition freigeben. Hierdurch kann auch ein leeres oder beladenes Fördermittel (5) mit Überhöhe die Arbeitsstelle (26) auf dem Förderweg (7) passieren. Die Kinematik des mobilen Ablageträgers (62) kann in beliebig geeigneter Weise ausgebildet sein. Sie kann z.B. in der gezeigten Schwenkbewegung bestehen. Alternativ ist eine Verschiebebewegung möglich. Der Ablageträger (62) kann auch von einer an der Stützeinrichtung (59) angeordneten Handlingeinrichtung (64) in eine Ruheposition mit sehr großem vertikalem Abstand vom Förderweg (7) und entsprechend vergrößerter Durchfahrtshöhe gebracht werden.

Der Ablageträger (62) ist vorzugsweise einteilig und platten- oder rahmenartig ausgebildet. Er kann alternativ mehrteilig ausgebildet sein, wobei seine Trägerteile zur Bildung der Ruheposition voneinander distanziert und in geeigneter Weise in ihrer Lage und/oder auch in ihrer Form verändert, z.B. gefaltet, werden.

Der Ablageträger (62) ist in der Arbeitsposition vorzugsweise liegend, insbesondere horizontal, ausgerichtet. Er ist bevorzugt stationär gehalten und abgestützt. Die Arbeitsposition bzw. Arbeitshöhe kann auf die Prozesserfordernisse und die programmgesteuerten Fertigungsmittel (28,29) und deren Arbeitsbereich abgestimmt sein.

Der Ablageträger (62) kann in der Funktion als Zwischenablage ein oder mehrere Werkstücke (2,2',2") aufnehmen. Er weist hierfür eine steuerbare und angetriebene Spann- und Positioniervorrichtung (63) auf, die z.B. an der Trägeroberseite angeordnet ist. Vorzugsweise werden das oder die Werkstücke (2,2',2") liegend oder stehend auf dem Ablageträger (62) aufgenommen.

Die Stützeinrichtung (59) ist lokal an der Arbeitsstelle (26) angeordnet. Sie ist gestellartig ausgebildet und derart gestaltet, dass sie einerseits den Förderweg (7) und die axiale Durchfahrtsöffnung (65) freilässt. Andererseits kann sie auch in Querrichtung dazu ein oder mehrere Öffnungen aufweisen. Im gezeigten Ausführungsbeispiel weist sie mehrere seitlich vom Förderweg (7) angeordnete und gegenseitig distanzierte aufrechte Stützen (61) auf. Diese sind z.B. in der Draufsicht in einem Rechteck angeordnet. Sie können am Boden fest oder beweglich, insbesondere verfahrbar, angeordnet sein.

Die Fertigungseinrichtung (18-22) weist an der Arbeitsstelle (26) eine Positioniereinrichtung (58) für ein LAM (6) und/oder für ein Fördermittel (5) auf. Die Positioniereinrichtung (58) ist vorzugsweise an der Stützeinrichtung (59) angeordnet.

In der gezeigten Ausführungsform wirkt die Positioniereinrichtung (58) mechanisch auf das LAM (6) und/oder das Fördermittel (5) ein. Sie weist z.B. Positioniermittel (60) an den Stützen (61) auf, die starr oder bevorzugt beweglich, insbesondere höhenverstellbar, angeordnet sind. Die Positioniermittel (60) können z.B. als quer in die Durchfahrtsöffnung (65) ragende, höhenverstellbare Tragarme ausgebildet sein. Sie befinden sich bevorzugt im unteren Stützenbereich und positionieren das LAM (6) im Arbeitsbereich der programmgesteuerten Fertigungsmittel (28,29). Die Positioniermittel (60) weisen z.B. Indexstifte oder Indexöffnungen für die definierte formschlüssige Aufnahme des LAM (6) und/oder des Fördermittels (5) auf. Durch die Höhenverstellbarkeit der Positioniereinrichtung (58) kann z.B. ein LAM (6) vom Fördermittel (5) gelöst und abgehoben werden. Das freigegebene bzw. leere Fördermittel (5) kann dann die Arbeitsstelle (26) verlassen.

In anderen Ausführungsvarianten kann eine Positioniereinrichtung (58) von taktil oder berührungslos erfassbaren Markierungen im Bereich des Förderwegs (7) gebildet werden, die vom Fördermittel (5) erfasst und für dessen programmgesteuerte und eigengetriebene Positionierung sorgen. In einer anderen Variante können in den Fahrweg einschwenkbare Anschläge für die Längs- und Seitenpositionierung des LAM (6) und/oder Fördermittels (5) vorhanden sein. Eine Positioniereinrichtung (58) kann auch steuerungstechnisch über die programmierte Steuerung des Fördermittels (5) und dessen integrierte Wegmessung bzw. Navigation gebildet werden.

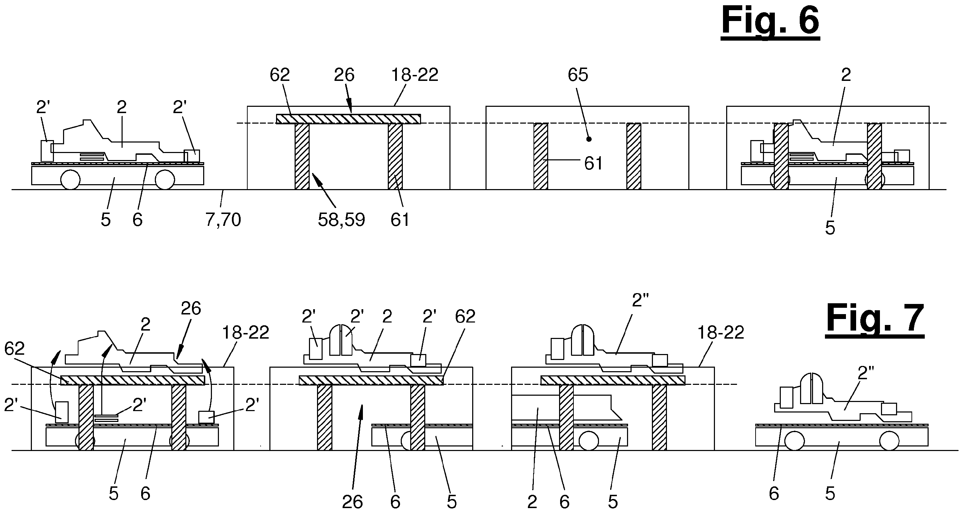

Wie Figur 3 bis 5 sowie die Funktionsabläufe von Figur 6 und 7 verdeutlichen, kann an der Arbeitsstelle (26) ein Werkstück (2,2',2") von einem LAM (6) auf den Ablageträger (62) umgeladen werden. Dies kann mittels eines programmgesteuerten Fertigungsmittels (28), insbesondere eines Handlingroboters, durch die frontseitigen und seitlichen Öffnungen der Stützeinrichtung (59) geschehen. Für das Entladen eines größeren Werkstücks (2) kann z.B. gemäß Figur 4 der mobile Ablageträger (62) zeitweise entfernt bzw. in die Ruheposition gebracht werden und anschließend wieder in die Arbeitsposition bewegt werden.

Auf dem LAM (6) können das oder die Werkstücke (2,2',2") in einer transportgünstigen und dicht gepackten Lage und Anordnung angeordnet sein. Sie müssen dabei noch keine fertigungsgerechte Lage einnehmen. Alternativ kann letzteres allerdings der Fall sein. In den gezeigten Ausführungsbeispielen wird die fertigungsgerechte Lage und gegenseitige Zuordnung von mehreren Werkstücken (2,2') auf dem Ablageträger (62) gebildet. Hier werden gegebenenfalls die mehreren Werkstücke (2,2') assembliert und von der Spann- und Positioniervorrichtung (63) prozessgerecht positioniert und gespannt. Anschließend können ein oder mehrere programmgesteuerte Fertigungsmittel (28,29) einen oder mehrere Prozesse an dem oder den Werkstücken (2,2') durchführen.

Wie Figur 3 bis 7 verdeutlichen, sind auf einem LAM (6) z.B. mehrere Werkstücke (2,2') zunächst in loser Zuordnung gehalten. Sie werden dann auf den Ablageträger (62) umgeladen und assembliert sowie anschließend gefügt. Hierdurch entsteht am Ende ein gefügtes Werkstück (2") gemäß Figur 7.

Wenn das LAM (6) entladen ist, kann das Fördermittel (5) mit dem LAM (6) die Arbeitsstelle (26) verlassen und den Förderweg (7) für ein nachfolgendes Fördermittel (5) freimachen. Dieses kann ein oder mehrere weitere Werkstücke der Arbeitsstelle (26) zuführen. Alternativ kann der freie Förderweg (7) auch für die bloße Durchfahrt eines leeren oder beladenen Fördermittels (5) durch die betreffende Fertigungseinrichtung (18-22) genutzt werden. Ferner ist es in der vorerwähnten Weise möglich, das LAM (6) an der Positioniereinrichtung (58) zu belassen und das leere Fördermittel (5) weiterfahren zu lassen.

Nach Beendigung der ein oder mehreren Fertigungsprozesse können das oder die Werkstücke, insbesondere das gefügte Werkstück (2), vom Ablageträger (62) wieder auf ein bereitstehendes Fördermittel (5) und ein LAM (6) zurückgeladen werden. Der Ablageträger (62) kann hierfür bedarfsweise in die Ruheposition bewegt werden und den Zugang zum LAM (6) von oben freimachen. Das Umladen kann ebenfalls durch ein programmgesteuertes Fertigungsmittel (29) erfolgen.

Figur 6 verdeutlicht einen Funktionsablauf bei Einfahrt eines beladenen Fördermittels (5) an einer Arbeitsstelle (26). Hierfür wird zunächst der Ablageträger (62) aus der Arbeitsposition in die Ruheposition bewegt und die Durchfahrtsöffnung (65) nach oben hin frei gemacht, so dass das Fördermittel (5) mit dem LAM (6) und dem oder den Werkstücken (2,2') in die Arbeitsstelle (26) und die Stützeinrichtung (59) einfahren kann. Das rechte Bild von Figur 6 verdeutlicht diese Stellung. Das übermäßig hohe Werkstück (2) kann bei geöffnetem Ablageträger (62) dann gemäß Figur 4 entnommen, gehalten und auf den wieder in der Arbeitsposition befindlichen Ablageträger (62) abgelegt werden. Anschließend können das oder die weiteren Werkstücke (2') entnommen und am Werkstück (2) assembliert werden. Das linke Bild von Figur 7 verdeutlicht diesen Funktionsschritt. In den beiden Folgebildern ist die Abfahrt des entladenen Fördermittels (5) und die Zufahrt oder Durchfahrt eines weiteren Fördermittels (5) dargestellt. Nach Prozessende wird das bearbeitete, insbesondere assemblierte und gefügte Werkstück (2) wieder auf ein Fördermittel (5) mit LAM (6) zurückgeladen und abtransportiert.

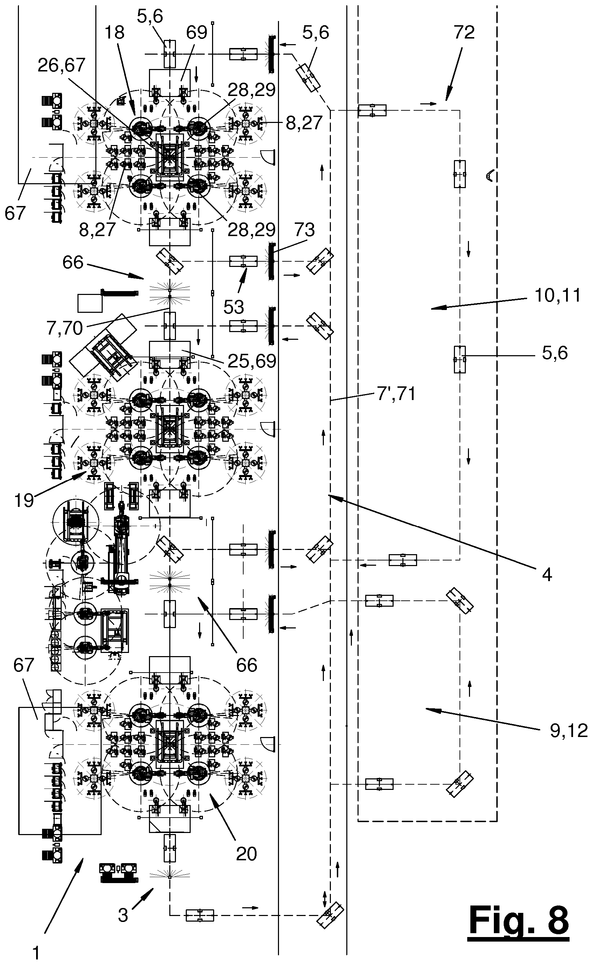

Wie Figur 1 und 8 verdeutlichen, können ein oder mehrere applikationsflexible Fertigungseinrichtungen (18-22) mit einer weiteren Fertigungseinrichtung (67) für einen Sekundärprozess an einem Werkstück (2,2',2") verbunden sein. Hierbei ist auch eine Mehrfachanordnung von solchen Fertigungseinrichtungen (67) möglich. Diese können seitlich neben oder auch oberhalb oder unterhalb einer Fertigungseinrichtung (18-22) angeordnet sein. In einer weiteren Fertigungseinrichtung (67) können ein oder mehrere programmgesteuerte Fertigungsmittel, insbesondere Industrieroboter, zum Handhaben und und Bearbeiten der Werkstücke (2,2',2") sowie weitere Vorrichtungen, z.B. stationäre Schweißzangen, Bolzensetzgeräte, Auftragegeräte für Klebstoff etc., angeordnet sein.

Der oder die in einer applikationsspezifischen Fertigungsstation (18-22) durchgeführten Primärprozess(e) sind vorzugsweise geometrie-spezifisch für das erwähnte Fertigungs-Produkt. Solche Prozesse können z.B. in einem Assemblieren, und in einem Fügen bestehen. Ein Fügeprozess kann durch Kleben (sogenannter Preprozess) oder einem geometriebestimmenden Punktschweißen oder Laserschweißen oder in einem Nieten oder Clinchen oder dgl. bestehen. Die ein oder mehreren Sekundärprozesse in einer weiteren Fertigungseinrichtung (67) können geometrie-unspezifisch sein. Sie können z.B. ein Fügen, Messen, formgebendes Bearbeiten, Schneiden oder dgl. umfassen. Bei einem Fügen können auch Zusatzteile, z.B. Bolzen oder dgl. angebracht werden. Ferner sind hard-codierte Sekundärprozesse möglich, die z.B. aus einem Lochen, Falzen, Bohren und/oder Fräsen oder dgl. bestehen.

Der Werkstückwechsel zwischen der applikationsspezifischen Fertigungseinrichtung (18-22) oder den ein oder mehreren weiteren Fertigungseinrichtungen (67) kann durch eine Schnittstelle (68) erfolgen, die z.B. an einem Durchlass einer Schutzabtrennung (24) angeordnet ist. Die weiteren Fertigungsbereiche (67) können ebenfalls von einer Schutzabtrennung (24) umgeben sein. Der Werkstückwechsel kann von einem programmgesteuerten Fertigungsmittel (28) insbesondere einem Handlingroboter, durchgeführt werden. Weitere Schnittstellen (69) können am Einlass und am bevorzugt gegenüber liegenden Auslass der Fertigungseinrichtung (18-22) angeordnet und z.B. von den Schleusen (25) gebildet werden.

Die Merkmale der verschiedenen Ausführungsbeispiele und ihrer Varianten können im Rahmen der Ansprüche miteinander kombiniert, insbesondere auch vertauscht werden.

### BEZUGSZEICHENLISTE

- 1: Fertigungsanlage
- 2: Werkstück
- 2': Werkstück
- 2": Werkstück
- 3: Fertigungsbereich
- 4: Fördereinrichtung, Fleet
- 5: Fördermittel, AGV
- 6: Lastaufnahmemittel LAM
- 7: Förderweg
- 8: applikationsspezifisches Werkzeug
- 9: Bereitstellung für Lastaufnahmemittel LAM
- 10: Bereitstellung für Werkstücke, Warehouse
- 11: Bereitstellung für Werkzeuge, Toolstore
- 12: Bereitstellung für Fördermittel
- 13:
- 14:
- 15:
- 16:
- 17:
- 18: Fertigungseinrichtung
- 19: Fertigungseinrichtung
- 20: Fertigungseinrichtung
- 21: Fertigungseinrichtung
- 22: Fertigungseinrichtung
- 23: Fertigungszelle, Prozesszelle primär
- 24: Schutzabtrennung
- 25: Schleuse
- 26: Arbeitsstelle, Bearbeitungsbereich
- 27: Speicher, Drehspeicher
- 28: Fertigungsmittel, Roboter, Handlingroboter
- 29: Fertigungsmittel, Roboter, Schweißroboter
- 30:
- 31:
- 32:
- 33:
- 34:
- 35:
- 36:
- 37:
- 38:
- 39:
- 40:
- 41:
- 42:
- 43:
- 44:
- 45:
- 46:
- 47:
- 48: Fertigungs-Loop, Typ A
- 49: Fertigungs-Loop, Typ B
- 50:
- 51:
- 52:
- 53: Parkbereich
- 54:
- 55:
- 56:
- 57:
- 58: Positioniereinrichtung LAM
- 59: Stützeinrichtung
- 60: Positioniermittel
- 61: Stütze
- 62: Ablageträger
- 63: Spann- und Positioniervorrichtung
- 64: Handlingeinrichtung
- 65: Durchfahrtsöffnung
- 66: Zufahrtskorridor
- 67: Fertigungseinrichtung Sekundärprozess
- 68: Schnittstelle
- 69: Schnittstelle
- 70: Förderlinie, Hinweg
- 71: Förderlinie, Rückweg
- 72: Logistikbereich
- 73: Schutztor, Durchgang

- A: Typ LAM
- B: Typ LAM
- C: Typ LAM
- D: Typ LAM

## Patentansprüche

1. Automatische Fertigungseinrichtung (18-22) für Werkstücke (2,2',2"), insbesondere für Karosseriebauteile, die zumindest ein programmgesteuertes Fertigungsmittel (28,29) und eine Arbeitsstelle (26) aufweist, **dadurch gekennzeichnet, dass** in der Fertigungseinrichtung (18-22) ein flurgebundener Förderweg (7) für ein flurgebundenes Fördermittel (5) mit einem Lastaufnahmemittel (6) für ein Werkstück (2,2',2") angeordnet ist, der sich durch die Fertigungseinrichtung (18-22) und durch die Arbeitsstelle (26) hindurch erstreckt, wobei an der Arbeitsstelle (26) mit vertikalem Abstand zum Förderweg (7) ein Ablageträger (62) für ein Werkstück (2,2',2") angeordnet ist und wobei ein Fertigungsmittel (29) ausgebildet ist zum Bearbeiten, insbesondere Fügen, eines Werkstücks (2,2',2") an der Arbeitsstelle (26) auf dem Ablageträger (62).

2. Fertigungseinrichtung nach Anspruch 1, **dadurch gekennzeichnet, dass** zwischen dem Förderweg (7) und dem bevorzugt darüber angeordneten Ablageträger (62) eine Durchfahrtsöffnung (65) für ein Fördermittel (5) und ggf. ein Werkstück (2,2',2") ausgebildet ist, wobei bevorzugt der Ablageträger (62) mobil ausgebildet ist, wobei die Fertigungseinrichtung (18-22) eine Handlingeinrichtung (64) aufweist, die den Ablageträger (62) zwischen einer Arbeitsposition am Förderweg (7) und einer hiervon entfernten Ruheposition bewegt.

3. Fertigungseinrichtung nach Anspruch 1 oder 2, **dadurch gekennzeichnet, dass** der Ablageträger (62) eine Spann- und Positioniervorrichtung (63) für ein Werkstück (2,2',2") aufweist.

4. Fertigungseinrichtung nach Anspruch 1, 2 oder 3, **dadurch gekennzeichnet, dass** der Ablageträger (62) eine Zwischenablage für ein Werkstück (2,2',2") an der Arbeitsstelle (26) bildet, wobei an der Arbeitsstelle (26) ein programmgesteuertes Fertigungsmittel (28) zum Umladen eines Werkstücks (2,2',2") von einem Lastaufnahmemittel (6) auf den Ablageträger (62) angeordnet ist.

5. Fertigungseinrichtung nach einem der vorhergehenden Ansprüche, **dadurch gekennzeichnet, dass** die Fertigungseinrichtung (18-22) eine umgebende Schutzabtrennung (24) mit Schleusen (25) auf dem Förderweg (7) für den gesicherten Einlass und Auslass eines Fördermittels (5) mit einem Lastaufnahmemittel (6) aufweist.

6. Fertigungseinrichtung nach einem der vorhergehenden Ansprüche, **dadurch gekennzeichnet, dass** ein Fertigungsmittel (29) zum Bearbeiten, insbesondere Fügen, eines Werkstücks (2,2',2") an der Arbeitsstelle (26) auf dem Lastaufnahmemittel (6) ausgebildet ist.

7. Fertigungsanlage für Werkstücke (2,2',2"), insbesondere Karosseriebauteile, wobei die Fertigungsanlage (1) einen Fertigungsbereich (3) für Werkstücke (2,2',2") mit mehreren Fertigungseinrichtungen (18-22) und einen Logistikbereich (72), insbesondere für Werkstücke (2,2',2"), aufweist, **dadurch**
**gekennzeichnet, dass** die Fertigungseinrichtungen (18-22) nach mindestens einem der Ansprüche 1 bis 6 ausgebildet sind und dass die Fertigungsanlage (1) eine Fördereinrichtung (4) mit mehreren Fördermitteln (5) und mit zumindest zwei typverschiedenen Lastaufnahmemitteln (6) aufweist.

8. Fertigungsanlage nach Anspruch 7, **dadurch gekennzeichnet, dass** mehrere aufgereihte Fertigungseinrichtungen (18-22) untereinander durch einen gemeinsamen, durchgängigen Förderweg (7) direkt miteinander verbunden sind, wobei bevorzugt neben den aufgereihten Fertigungseinrichtungen (18-22) ein weiterer Förderweg (7') angeordnet ist.

9. Fertigungsanlage nach Anspruch 7 oder 8, **dadurch gekennzeichnet, dass** die Fördermittel (5) individuell steuerbar sind und bevorzugt als autonomes Fahrzeug (FTF oder AGV) oder als Flurförderfahrzeug oder als Rollenförderer ausgebildet sind.

10. Fertigungsanlage nach einem der Ansprüche 7 bis 9, **dadurch gekennzeichnet, dass** die Lastaufnahmemittel (6) zur Aufnahme eines Werkstücks (2,2',2") und/oder eines applikationsspezifischen Werkzeugs (8) ausgebildet sind, wobei die im Typ (A,B,C,D) verschiedenen Lastaufnahmemittel (6) an unterschiedliche Werkstücke (2,2',2") adaptiert sind.

11. Verfahren zur automatischen Fertigung von Werkstücken (2,2',2"), insbesondere Karosseriebauteilen, mittels einer Fertigungseinrichtung (18-22), die zumindest ein programmgesteuertes Fertigungsmittel (28,29) und eine Arbeitsstelle (26) aufweist, **dadurch gekennzeichnet, dass** in der Fertigungseinrichtung (18-22) ein flurgebundener Förderweg (7) für ein flurgebundenes Fördermittel (5) mit einem Lastaufnahmemittel (6) für ein Werkstück (2,2',2") angeordnet ist, der sich durch die Fertigungseinrichtung (18-22) und durch die Arbeitsstelle (26) hindurch erstreckt, wobei an der Arbeitsstelle (26) mit vertikalem Abstand zum Förderweg (7) ein Ablageträger (62) für ein Werkstück (2,2',2") angeordnet ist und wobei an einem am Ablageträger (62) abgelegten Werkstück (2,2',2") ein oder mehrere Prozesse von programmgesteuerten Fertigungsmitteln (28,29) durchgeführt werden.

12. Verfahren nach Anspruch 11, **dadurch gekennzeichnet, dass** der Ablageträger (62) eine Zwischenablage für ein Werkstück (2,2',2") an der Arbeitsstelle (26) bildet und bevorzugt mittels einer lokalen Stützeinrichtung (59) an der Arbeitsstelle (26) starr oder beweglich gehalten wird, wobei ein Werkstück (2,2',2") von einem programmgesteuerten Fertigungsmittel (28) von einem Lastaufnahmemittel (6) auf den Ablageträger (62) umgeladen und zurückgeladen wird.

13. Verfahren nach Anspruch 11 oder 12, **dadurch gekennzeichnet, dass** am Ablageträger (62) ein Assemblieren von mehreren Werkstücken (2,2',2") stattfindet, die von einem oder von mehreren Fördermitteln (5) zugeführt werden.

14. Verfahren nach einem der Ansprüche 11 bis 13, **dadurch gekennzeichnet, dass** ein Fördermittel (5) an der Arbeitsstelle (26) entladen wird und dann die Arbeitsstelle (26) wieder verlässt und den Förderweg (7) freimacht, wobei anschließend weitere Werkstücke (2,2',2") mit dem gleichen oder einem anderen Fördermittel (5) zugeführt werden und/oder der frei gemachte Förderweg (5) als Durchfahrtsweg für andere beladene oder leere Fördermittel (5) genutzt wird.

15. Verfahren nach einem der Ansprüche 11 bis 14, **dadurch gekennzeichnet, dass** an der Arbeitsstelle (26) zusätzlich ein Prozess an einem Werkstück (2,2',2") durchgeführt wird, dass sich auf einem Lastaufnahmemittel (6) befindet.

## Claims

1. Automatic manufacturing unit (18-22) for workpieces (2, 2', 2"), in particular for vehicle body components, which comprises at least one program-controlled manufacturing means (28, 29) and a workstation (26), **characterized in that** a floor-bound conveying path (7) for a floor-bound conveying means (5) having a load receiving means (6) for a workpiece (2, 2', 2") is arranged in the manufacturing unit (18-22) and extends through the manufacturing unit (18-22) and through the workstation (26), wherein a carrier pallet (62) for a workpiece (2, 2', 2") is arranged at the workstation (26) at a vertical distance from the conveying path (7), and wherein a manufacturing means (29) is designed to process, in particular join, a workpiece (2, 2', 2") at the workstation (26) on the carrier pallet (62).

2. Manufacturing unit according to Claim 1, **characterized in that** a through-travel opening (65) for a conveying means (5) and, where appropriate, a workpiece (2, 2', 2'') is formed between the conveying path (7) and the carrier pallet (62) preferably arranged there above, wherein the carrier pallet (62) is preferably designed to be mobile, wherein the manufacturing unit (18-22) comprises a handling device (64) which moves the carrier pallet (62) between a working position on the conveying path (7) and a rest position remote therefrom.

3. Manufacturing unit according to Claim 1 or 2, **characterized in that** the carrier pallet (62) comprises a clamping and positioning device (63) for a workpiece (2, 2', 2").

4. Manufacturing unit according to Claim 1, 2 or 3, **characterized in that** the carrier pallet (62) forms a buffer pallet for a workpiece (2, 2', 2") at the workstation (26), wherein a program-controlled manufacturing means (28) is arranged at the workstation (26) for transferring a workpiece (2, 2', 2") from a load receiving means (6) onto the pallet carrier (62).

5. Manufacturing unit according to one of the preceding claims, **characterized in that** the manufacturing unit (18-22) has a surrounding protective partition (24) with airlocks (25) on the conveying path (7) for the secured entry and exit of a conveying means (5) having a load receiving means (6).

6. Manufacturing unit according to one of the preceding claims, **characterized in that** a manufacturing means (29) is designed for processing, in particular joining, a workpiece (2, 2', 2") at the workstation (26) on the load receiving means (6).

7. Manufacturing installation for workpieces (2, 2', 2''), in particular vehicle body components, wherein the manufacturing installation (1) comprises a manufacturing region (3) for workpieces (2, 2', 2") having a plurality of manufacturing units (18-22), and comprises a logistics region (72), in particular for workpieces (2, 2', 2"), **characterized in that** the manufacturing units (18-22) are designed according to at least one of Claims 1 to 6, and **in that** the manufacturing installation (1) comprises a conveying arrangement (4) having a plurality of conveying means (5) and having at least two different-type load receiving means (6).

8. Manufacturing installation according to Claim 7, **characterized in that** a plurality of lined-up manufacturing units (18-22) are directly connected to one another by a common, continuous conveying path (7), wherein a further conveying path (7') is preferably arranged alongside the lined-up manufacturing units (18-22).

9. Manufacturing installation according to Claim 7 or 8, **characterized in that** the conveying means (5) are individually controllable and preferably take the form of autonomous vehicles (FTF or AGV) or floor conveying vehicles or roller conveyors.

10. Manufacturing installation according to one of Claims 7 to 9, **characterized in that** the load receiving means (6) are designed to receive a workpiece (2, 2', 2") and/or an application-specific tool (8), wherein the load receiving means (6), which differ in the type (A, B, C, D), are adapted to different workpieces (2, 2', 2").

11. Method for the automatic manufacturing of workpieces (2, 2', 2"), in particular vehicle body components, by means of a manufacturing unit (18-22) which comprises at least one program-controlled manufacturing unit (28, 29) and a workstation (26), **characterized in that** a floor-bound conveying path (7) for a floor-bound conveying means (5) having a load receiving means (6) for a workpiece (2, 2', 2") is arranged in the manufacturing unit (18-22) and extends through the manufacturing unit (18-22) and through the workstation (26), wherein a carrier pallet (62) for a workpiece (2, 2', 2") is arranged at the workstation (26) at a vertical distance from the conveying path (7), and wherein one or more processes are carried out by program-controlled manufacturing means (28, 29) on a workpiece (2, 2', 2") deposited on the carrier pallet (62).

12. Method according to Claim 11, **characterized in that** the carrier pallet (62) forms a buffer pallet for a workpiece (2, 2', 2") at the workstation (26) and is preferably rigidly or movably held by means of a local supporting device (59) at the workstation (26), wherein a workpiece (2, 2', 2") is transferred from a program-controlled manufacturing means (28) from a load receiving means (6) onto the pallet carrier (62) and transferred back again.

13. Method according to Claim 11 or 12, **characterized in that** assembly of a plurality of workpieces (2, 2', 2''), which are supplied by one or more conveying means (5), takes place on the pallet carrier (62).

14. Method according to one of Claims 11 to 13, **characterized in that** a conveying means (5) is unloaded at the workstation (26) and then leaves the workstation (26) again and frees up the conveying path (7), wherein then further workpieces (2, 2', 2") are supplied by the same or a different conveying means (5) and/or the freed-up conveying path (5) is used as a through-travel path for other loaded or empty conveying means (5).

15. Method according to one of Claims 11 to 14, **characterized in that** a process is additionally carried out at the workstation (26) on a workpiece (2, 2', 2") which is situated on a load receiving means (6).

## Revendications

1. Dispositif (18-22) de fabrication automatique de pièces (2, 2', 2"), en particulier de composants de carrosserie, lequel dispositif comporte au moins un moyen de fabrication (28, 29) commandé par programme et un poste de travail (26), **caractérisé en ce qu'**un chemin de transport au sol (7) destiné à un moyen de transport au sol (5) comprenant un dispositif de support de charge (6) destiné à une pièce (2, 2', 2") est disposé dans le dispositif de fabrication (18-22) et s'étend à travers le dispositif de fabrication (18-22) et à travers le poste de travail (26), un support de stockage (62) destiné à une pièce (2, 2', 2") étant disposé au niveau du poste de travail (26) à une distance verticale du chemin de transport (7) et un moyen de fabrication (29) étant conçu pour traiter, en particulier assembler, une pièce (2, 2', 2") au niveau du poste de travail (26) sur le support de stockage (62) .

2. Dispositif de fabrication selon la revendication 1, **caractérisé en ce qu'**une ouverture de passage (65), destinée à un moyen de transport (5) et éventuellement à une pièce (2, 2', 2"), est ménagée entre le chemin de transport (7) et le support de stockage (62), disposé de préférence au-dessus de celui-ci, le support de stockage (62) étant de préférence mobile, le dispositif de fabrication (18-22) comportant un dispositif de manipulation (64) qui déplace le support de stockage (62) entre une position de travail sur le chemin de transport (7) et une position de repos éloignée de celui-ci.

3. Dispositif de fabrication selon la revendication 1 ou 2, **caractérisé en ce que** le support de stockage (62) comporte un dispositif (63) de positionnement et de serrage d'une pièce (2, 2', 2").

4. Dispositif de fabrication selon la revendication 1, 2 ou 3, **caractérisé en ce que** le support de stockage (62) forme un stockage intermédiaire destiné à une pièce (2, 2', 2") au niveau du poste de travail (26), un moyen de fabrication (28) commandé par programme étant disposé au niveau du poste de travail (26) pour transférer une pièce (2, 2', 2") d'un moyen de réception de charge (6) sur le support de stockage (62) .

5. Dispositif de fabrication selon l'une des revendications précédentes, **caractérisé en ce que** le dispositif de fabrication (18-22) comporte une séparation de protection périphérique (24) pourvue de sas (25) sur le chemin de transport (7) destinés à l'entrée et à la sortie sécurisées d'un moyen de transport (5) pourvu d'un moyen de réception de charge (6) .

6. Dispositif de fabrication selon l'une des revendications précédentes, **caractérisé en ce qu'**un moyen de fabrication (29) conçu pour le traitement, notamment l'assemblage, d'une pièce (2, 2', 2") est formé au niveau du poste de travail (26) sur le moyen de réception de charge (6).

7. Installation de fabrication de pièces (2, 2', 2"), en particulier de composants de carrosserie, l'installation de fabrication (1) comportant une zone de fabrication (3), qui est destinée à des pièces (2, 2', 2") qui comporte plusieurs dispositifs de fabrication (18-22), et une zone logistique (72), destinée en particulier à des pièces (2, 2', 2"), **caractérisée en ce que** les dispositifs de fabrication (18-22) sont conçus selon l'une au moins des revendications 1 à 6 et **en ce que** l'installation de fabrication (1) comporte un dispositif de transport (4) pourvu de plusieurs moyens de transport (5) et d'au moins deux moyens de réception de charge (6) de type différent.

8. Installation de fabrication selon la revendication 7, **caractérisée en ce que** plusieurs dispositifs de fabrication (18-22) disposés en série sont directement reliés entre eux par un chemin de transport continu commun (7), un autre chemin de transport (7') étant disposé de préférence à côté des dispositifs de fabrication (18-22) disposés en série.

9. Installation de fabrication selon la revendication 7 ou 8, **caractérisée en ce que** les moyens de transport (5) peuvent être commandés individuellement et sont conçus de préférence comme un véhicule autonome (FTF ou AGV) ou comme un véhicule de transport au sol ou comme un convoyeur à rouleaux.

10. Installation de fabrication selon l'une des revendications 7 à 9, **caractérisée en ce que** les moyens de réception de charge (6) sont conçus pour recevoir une pièce (2, 2', 2") et/ou un outil (8) spécifique à l'application, les moyens de réception de charge (6) de différents types (A, B, C, D) étant adaptés à différentes pièces (2, 2', 2").

11. Procédé de fabrication automatique de pièces (2, 2', 2"), en particulier de composants de carrosserie, au moyen d'un dispositif de fabrication (18-22) qui comporte au moins un moyen de fabrication (28, 29) commandé par programme et un poste de travail (26), **caractérisé en ce qu'**un chemin de transport au sol (7) destiné à un moyen de transport au sol (5) pourvu d'un moyen de réception de charge (6) destiné à une pièce (2, 2', 2") est disposé dans l'installation de fabrication (18-22) et s'étend à travers le dispositif de fabrication (18-22) et à travers le poste de travail (26), un support de stockage (62) destiné à une pièce (2, 2', 2") étant disposé au niveau du poste de travail (26) à une distance verticale du chemin de transport (7) et un ou plusieurs processus étant mis en œuvre par des moyens de fabrication (28, 29) commandés par programme sur une pièce (2, 2', 2") placée sur le support de stockage (62).

12. Procédé selon la revendication 11, **caractérisé en ce que** le support de stockage (62) forme un stockage intermédiaire destiné à une pièce (2, 2', 2") au niveau du poste de travail (26) et est tenu de manière rigide ou mobile de préférence au moyen d'un dispositif de support local (59) au niveau du poste de travail (26), une pièce (2, 2', 2") étant transférée depuis un moyen de réception de charge (6) sur le support de stockage (62) et inversement, d'un moyen de fabrication (28) commandé par programme.

13. Procédé selon la revendication 11 ou 12, **caractérisé en ce qu'**un assemblage de plusieurs pièces (2, 2', 2"), qui sont amenées par un ou plusieurs moyens de transport (5), est effectué sur le support de stockage (62).

14. Procédé selon l'une des revendications 11 à 13, **caractérisé en ce qu'**un moyen de transport (5) est déchargé au niveau du poste de travail (26) puis quitte à nouveau le poste de travail (26) et libère le chemin de transport (7), puis d'autres pièces (2, 2', 2") sont amenées avec le même moyen de transport (5), ou un autre, et/ou le chemin de convoyeur (5) libéré est utilisé comme chemin de passage d'un autre moyen de transport (5) chargé ou vide.

15. Procédé selon l'une des revendications 11 à 14, **caractérisé en ce qu'**un procédé est également mis en œuvre sur une pièce (2, 2', 2"), située sur un moyen de réception de charge (6), au niveau du poste de travail (26).
